# EUROPÄISCHE PATENTSCHRIFT

(11) **EP 2 472 431 B1**
(45) Veröffentlichungstag und Bekanntmachung des Hinweises auf die Patenterteilung: **20.04.2016**
(21) Anmeldenummer: 11010297.7
(22) Anmeldetag: 30.12.2011
(51) Int. Cl.: G06K 7/00, G06K 13/08

(54) **Smart Card Connector mit landenden Kontakten**
Smart card connector with landing contacts
Connecteur de carte à puce doté de contacts à atterrissage

(30) Priorität: 31.12.2010 DE 102010056601
(43) Veröffentlichungstag der Anmeldung: 04.07.2012
(73) Patentinhaber: Amphenol-Tuchel Electronics GmbH, 74080 Heilbronn (DE)
(72) Erfinder: Bertsch, Michael, 74080 Heilbronn (DE)
(74) Vertreter: Wagner, Karl H.

(56) Entgegenhaltungen:
- WO-A1-98/24045
- DE-A1- 3 815 959

## Beschreibung

Die Erfindung bezieht sich auf einen Smart Card Connector (im Folgenden auch SCC) und zwar insbesondere auf einen Smart Card Connector mit landenden Kontakten, und zwar insbesondere der Lesekontakte von Lesekontaktelementen.

Smart Card Connectoren oder auch Chipkartenleser sind vielfach bekannt und dienen dazu beispielsweise die Kartenkontakte oder Kontaktflächen einer Chipkarte bzw. Smart Card zu kontaktieren und mit einem Anwendungsgerät zu verbinden.

Ein Problem bei der Kontaktierung der Kartenkontakte mit den Lesekontakten ist der auftretende Abrieb der Beschichtung der Kartenkontakte und/oder der Lesekontakte. Dies ist um so mehr von Bedeutung, als eine einwandfreie Steckzahl bis zu 500 000 Steckvorgänge und Kontaktvorgänge gefordert wird.

Ferner wäre eine Koplanarität des SC-Connectors wünschenswert. Bei einem SCC sind im Allgemeinen zehn Lötstellen oder Anschlusskontakte aufgrund von acht kontaktierenden Lesekontakten und zwei Kontakten eines Kartenanwesenheitsschalters vorhanden. Diese zehn Lötstellen oder Anschlusskontakte müssen dabei vorzugsweise auf einer verhältnismäßig kleinen ebenen Fläche angeordnet werden, was gemäß der vorliegenden Erfindung vorgesehen wird, so dass diese zehn Lötstellen nicht mehr zueinander justiert werden müssen.

Die Druckschrift DE 38 15 959 A1 beschriebt einen Kartenleser mit einem Schieber, der von einer einen integrierten Schaltkreis aufweisenden Karte auf einem letzten Abschnitt der Einschubbewegung mitgenommen wird. Anspruch 1 ist gegenüber diesem Dokument abgegrenzt. Die Erfindung ist Gegenstand des Anspruchs 1.

Die Druckschrift WO 98/24045 A1 zeigt einen Smart Card Connector mit einem drehbaren Aktuator, der aus einer Metallplatte durch Pressen gebildet wird und integral eine Feder, einen Einbauteil und einen Kartenanwesenheitsschalter aufweist.

Karte mitbewegt und angehoben wird, so dass die Lesekontakte mit den Kartenkontakten der Smart Card in Kontakt kommen, wobei die Kontaktverbindung zwischen den im Schieber (14) angeordneten Lesekontaktelementen und einem vorzugsweise am Gehäuse anbringbaren Anschluss Herausführelement, durch eine flexible Leiterplatte hergestellt wird.

Das Einschieben der Karte ohne Reibung ist dadurch möglich, dass in der Grundstellung (untere Endlage) die in dem Schieber montierten Lesekontaktelemente mit ihren Lesekontakten vertieft in dem Gehäuse angeordnet sind. Dabei wird im Einzelnen beim Stecken der Karte in den SCC der Schieber durch Mitnahmezapfen mit der Karte mitbewegt, wodurch der Schieber angehoben wird und die in diesem getragenen Lesekontaktelemente mit ihren Lesekontakten die Kartenkontakte kontaktieren.

Die Auf- und Abbewegung des Schiebers im Gehäuse wird durch Führungskurven gewährleistet und zur Rückführung in die untere Endlage sind Federn vorgesehen die nach der Montage verhindern, dass der Schieber demontiert werden kann. Vorzugsweise ist am freien Ende der flexiblen Leiterplatte ein Versteifungselement bzw. Anschlussherausführungselement vorgesehen, welches im Gehäuse durch Einstecken befestigbar ist. Speziell können auf dem Versteifungselement die freiliegenden Leiterbahnen der flexiblen Leiterplatte angeordnet und befestigt sein, so dass Lötkontakte zur Kundenleiterplatte gebildet werden.

Weitere bevorzugte Ausgestaltungen der Erfindung ergeben sich aus den Patentansprüchen.

Bevorzugte Ausgestaltungen der Erfindung ergeben sich aus der Beschreibung eines Ausführungsbeispiels anhand der Zeichnung;
in der Zeichnung zeigt:
- Figur 1: eine perspektivische Draufsicht auf die Oberseite eines erfindungsgemäßen Smart Card Readers;
- Figur 2: eine perspektivische Draufsicht auf die Unterseite des Smart Card Readers der Figur 1;
- Figur 3: eine perspektivische Draufsicht auf den Smart Card Reader der Figur 1, wobei der in Figur 1 gezeigte Deckel abgenommen ist und ein, die Lesekontaktelemente tragender Schieber in seiner Karteneinführ- oder Ausgangsstellung befindet;
- Figur 4: eine Ansicht ähnlich Figur 3, wobei aber hier der Schieber durch eine nicht gezeigte Karte in seine Lesestellung bewegt ist, wobei man erkennt, dass die Lesekontaktelemente gegenüber Figur 3 angehoben sind;
- Figur 5: eine perspektivische Draufsicht auf den in den Figuren 3 und 4 gezeigten Schieber im Einzelnen;
- Figur 6: eine Ansicht des Schiebers der Figur 5 schräg von unten;
- Figur 7: eine schematische Draufsicht auf einen Smart Card Reader, wie er in Figur 1 dargestellt ist;
- Figur 8: einen Schnitt längs Linie A-A in Figur 7, für den Fall dass keine Karte eingesetzt ist; und
- Figur 9: einen Schnitt ähnlich Figur 8, wobei aber hier die Karte eingesetzt ist, was in Figur 7 nicht dargestellt ist, wobei die in Fig. 8 den Schieber in seine Anfangsstellung vorspannenden Federn zusammengedrückt dargestellt sind. (Fig. 8 und Fig. 9 sind auch vergrößert angefügt.)

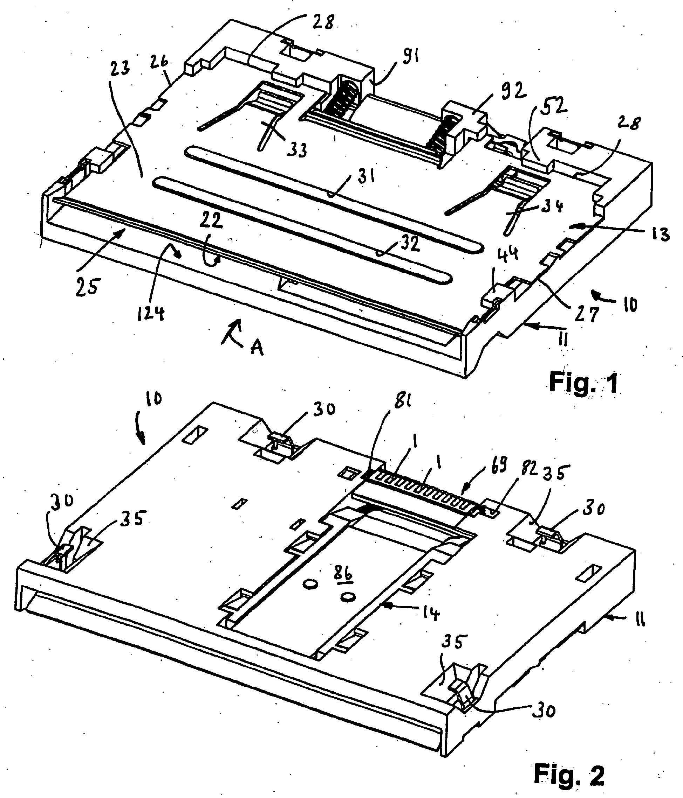

In den Figuren 1 und 2 ist ein erfindungsgemäßer Smart Card Connector (SC-Connector, Chipkartenleser) 10 dargestellt, der im Wesentlichen aus einem Gehäuse 11, einem darauf angebrachten Deckel 13 besteht. Das Gehäuse weist eine durch eine Deckeloberseite 23 gebildete Oberseite 23 auf und ferner eine Unterseite 24. Das Gehäuse 11 ist vorzugsweise aus Kunststoff hergestellt und der Deckel 13 ist vorzugsweise aus Metallblech hergestellt und besitzt die erwähnte Oberseite 23 und eine Unterseite 22.

Wie Figur 1 gezeigt, wird ist zwischen der Unterseite 22 des Deckels 13 und der Oberseite 24 des Gehäuses 11 ein Karteneinführ- und Entnahmeschlitz 25 gebildet.

### Der Deckel 13

Der Deckel 13 weist - vergleiche Figur 1 - ein linke Führungskante 26 und eine rechte Führungskante 27 sowie eine hintere Anschlagkanten 28 auf. Der Deckel 13 weist deckelseitige Deckelbefestigungsmittel 30 auf, die zu seiner Befestigung am Gehäuse 11 dienen und mit gehäuseseitigen Deckelbefestigungsmitteln 35 in Eingriff sind. Der Deckel 13 bildet zwei zur Einsteckrichtung A der Karte quer verlaufende Vertiefungen 31 und 32 sowie zum Ausdrücken der Karte and die Kontaktkuppen 70, 701 ein linkes Federelement 33 und ein rechtes Federelement 34.

### Das Gehäuse 11

Beim Einschieben der Karte in den Schlitz 25 wird ein im Gehäuse 11 in Einsteckrichtung hin und her bewegbar geführter Lesekontaktelemente 16 tragender Schieber 14 entgegen der von vorzugsweise Federn 20, 21 auf den Schieben 14 ausgeübten Kraft verschoben und gleichzeitig zur Deckelunterseite 22 hin angehoben.

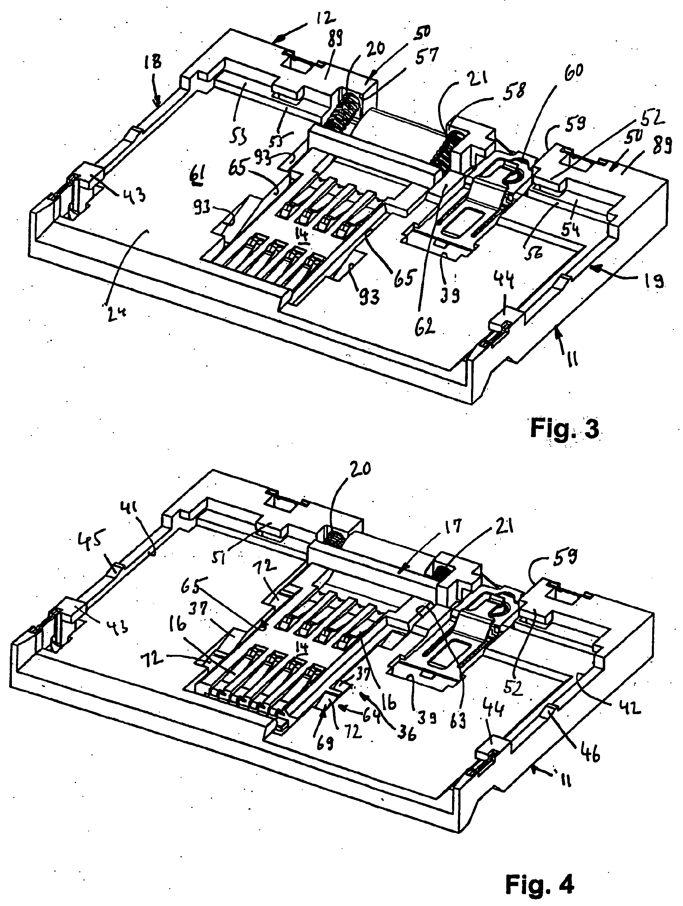

Das Gehäuse 11 bildet, vgl. insbesondere die Figuren 3 und 4, einen Gehäuseboden 61, der nach vorne hin zur Bildung des Einführschlitzes 25 abgeschrägt ist. Der Gehäuseboden 61 wird von einer linken Gehäuseseitenwand 18 und einer rechten Gehäuseseitenwand 19 sowie einer im Ganzen mit Rückwandteile 89 aufweisenden Rückwand 50 begrenzt.

Etwa in der Mitte des Gehäuses 11 ist eine den Gehäuseboden 61 durchdringende Öffnung 65 zur Aufnahme des Schiebers 13 ausgebildet. Ferner bildet der Gehäuseboden 61, benachbart zur Rückwand 89, benachbart zur Öffnung 65 einen Führungsblock 62 mit einer Führungsfläche 63, die mit einer von dem Schieber 14 gebildeten Führungsfläche in Berührung steht.

Die Hub- und Absenkbewegung des Schiebers 14 beim Einschieben der Karte wird durch Schieberanheb- und -absenkmittel bewirkt, die schieberseitige Anheb-/Absenkmittel 69 aufweisen und ferner gehäuseseitige Schieberanheb-/Absenkmittel 36. Im dargestellten Ausführungsbeispiel werden die Schieberanheb-/Absenkmittel durch vier in zur Seitenflächen der Öffnung 65 gebildete Gehäuseschrägflächen 37 realisiert, von denen zwei in Fig. 4 zu sehen sind. Der Gehäuseboden 61 bildet ferner die Öffnung 65 begrenzende Führungsflächen, die mit entsprechenden Seitenkanten oder Seitenflächen des Schiebers 14 in Berührung stehen.

Die beiden Seitenwände 18, 19 des Gehäuses 11 begrenzen den Karteneinsetzschlitz 25 seitlich und sehen Kartenführungsflächen vor. Die Seitenwände 18, 19 des Gehäuses 11 bilden ferner, in etwa mittig angeordnet, Nockenflächen 45, 46 die dazu dienen den Deckel 13 festzulegen. Die beiden Seitenwände 18, 19 bilden jeweils einen Haltevorsprung 43 bzw. 44 um zusammen mit den Haltvorsprüngen 51, 52 den Deckel 13 in einer bestimmten Höhenposition zu halten.

Die Rückwand 50 bildet zwei beabstandete Haltevorsprünge 51, 52 für den Deckel 13. Die Rückwand 50 bildet ferner, vorzugsweise benachbart zu Auflageflächen 53, 54 für den Deckel 13 senkrecht zum Boden 61 verlaufende Kartenanschlagflächen 54, 56. Die Rückwand 50 bildet ferner in etwa senkrecht verlaufende Federanlageflächen 57, 58 für die Federn 20 bzw. 21. Ferner bildet die Rückwand 50 eine Ausnehmung zur Aufnahme eines Kartenanwesenheitsschalters 60.

### Der Schieber 14

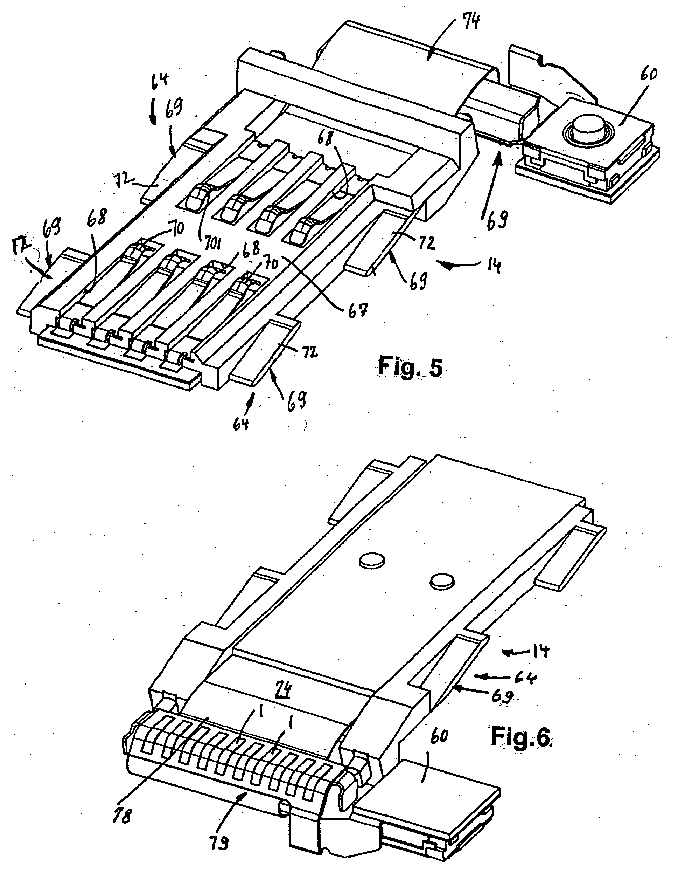

Der Schieber 14 ist im einzelnen in den Figuren 5 und 6 dargestellt, und ist im wesentlichen plattenförmig ausgebildet, wobei an seinem hinteren Ende (das heißt dem in Karteneinführrichtung nach hinten gelegenen Ende) ein Mitnehmer 17 ausgebildet ist, an dem die nicht gezeigte Karte beim Einführen in den SC-Connector 10 zur Anlage kommt und den Schieber 14 dann aus der in Figur 3 gezeigten Position entgegen der Vorspannung der Federn 57, 58, in die in Figur 4 gezeigte Position bewegt, in der der Schieber 14 z. B. durch Verrasten seiner Vorderkante mit dem Gehäuse verriegelt ist.

Der vorzugsweise aus Kunststoff bestehende Schieber 14 weist Platte auf, in der Schlitze 68 ausgebildet sind, in denen die Lesekontaktelemente 16 eingesetzt sind. Die Lesekontaktelemente 16 haben an ihren freien Enden Kontaktkuppen 70, 701, die vorzugsweise vergoldet sind. Mit dem zu den Kontaktkuppen 70, 701 entgegengesetzten Anschlussenden 161 sind die Lesekontaktelemente 16 am Schieber 14 befestigt. Ferner sind am Schieber 14, schieberseitige Anheb-/Absenkmittel 64 angebracht. Die schieberseitigen Anheb-/Absenkmittel 64 sind im dargestellten Ausführungsbeispiel an der Schieber-Platte 67 beidseitig angebrachte Führungselemente in der Form von vier Flügeln 69, die mit gegenüber der durch die Platte 67 aufgespannten Ebene geneigte Führungsflächen 72 bilden, die mit den vom Gehäuse 11 gebildeten Führungs- oder Schrägflächen 37 zusammenarbeiten, um das Anheben und Absenken des Schiebers 14 zu bewirken.

Der Schieber 14 bildet an den beiden Längsseiten der Platte 67 eine linke Führungsfläche und eine rechte Führungsfläche. Zusätzlich wird zur Zusammenarbeit mit der Führungsfläche 63 des Führungsblocks 62 des Gehäuses 11 vom Schieber 14 eine weitere Führungsfläche gebildet.

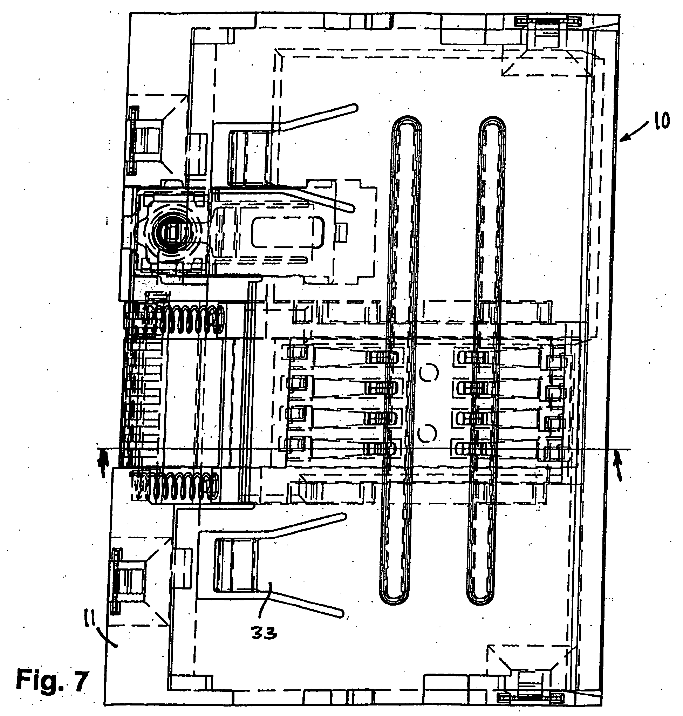

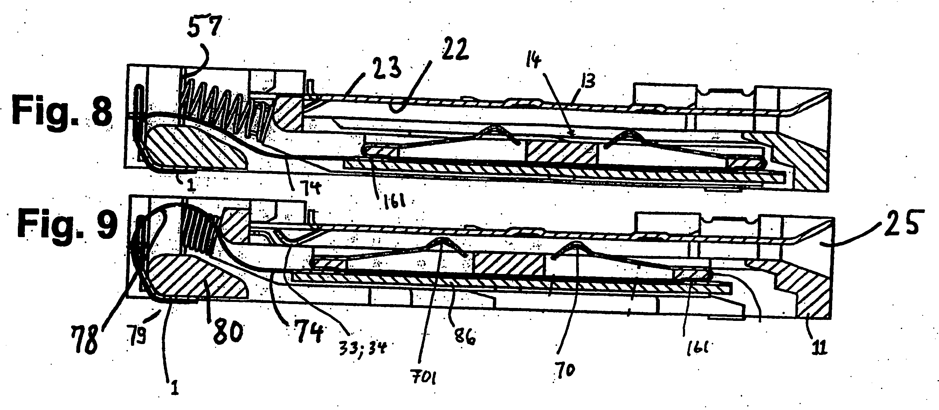

In den Figuren 7 bis 9 ist insbesondere dargestellt, dass das Anschlussende 161 der Kontaktelemente 16 mit einem Flexprint 74 in Verbindung stehen. Ein Flexprint 74 ist eine flexible Leiterplatte, die isolierte Kontaktbahnen enthält. Wie man in Figuren 8 und 9 erkennt, erstreckt sich das Kontaktelementverbindungsende des Flexprints 74 nahezu über die gesamte Länge des Schiebers 14, um die Anschlussenden 161 der zwei Reihen von Kontaktelementen 16 zu kontaktieren. Der Flexprint 74 ist, wie man in den Figuren 8 und 9 erkennt, so angebracht und ausgelegt, dass der Schieber bzw. Schlitten 14 seine Bewegung von der Ausgangsstellung in seine Kontaktstellung zurück ausführen kann.

Das Herausführ-Anschlussende 78 des Flexprints 74 endet an einem Anschlusselement 79, welches Versteifungselemente 80 aufweist. Das Anschlusselement 79 ist am Gehäuse 11 befestigt, beispielsweise dadurch, dass das Anschlusselement 79 in von Gehäuse 11 gebildete Schlitze 81, 82 eingesteckt ist.

Das Versteifungselement 80 trägt das Herausführende 78 des Flexprints 74 direkt oder das Herausführende des Flexprints 74 ist mit einem von dem Verstärkungselement 80 getragenen Kontaktelement verbunden, welches Herausführanschlusskontakte für die Lesekontaktelemente 16 und für den Kartenanwesenheitsschalter 60 bildet. Der Kartenanwesenheitsschalter 60 ist gegebenenfalls vorzugsweise mit einem weiteren Flexprint mit den entsprechenden Herausführanschlusskontakten verbunden.

Der Flexprint 74 wird durch eine Halteplatte 86 in Kontakt mit den Anschlusskontakten der Kontaktelemente gehalten. Die Platte 86 ist beispielsweise am Schieber 14 angenietet.

### Bezugszeichenliste

- 1: Anschlusskontakte
- 10: Smart Card Connector, Chip-Card Leser (im Folgenden SC-Connector)
- 11: Gehäuse
- 12: Rückwand
- 13: Deckel
- 14: Schieber, Kontaktträger
- 16: Lesekontaktelemente
- 17: Mitnehmer
- 18: linke Gehäuseseitenwand
- 19: rechte Gehäuseseitenwand
- 20: Feder
- 21: Feder
- 22: Unterseite des Deckels
- 23: Oberseite des Deckels
- 24: Oberseite des Gehäuses
- 25: Einführ- und Entnahmeschlitz
- 26: linke Führungskante des Deckels
- 27: rechte Führungskante des Deckels
- 28: hintere Anschlagkanten des Kontaktträgers für den Deckel
- 30: deckelseitige Deckelbefestigungsmittel
- 31: querverlaufende Vertiefung
- 32: querverlaufende Vertiefung
- 33: linkes Deckelfederelement
- 34: rechtes Deckelfederelement
- 35: gehäuseseitige Deckelbefestigungsmittel
- 36: gehäuseseitige Schieberanheb-/Absenkmittel
- 37: vier Gehäuse-Schrägflächen
- 39: Ausnehmung
- 41: Kartenseitenführungsfläche
- 42: Kartenseitenführungsfläche
- 43: Vorsprung
- 44: Vorsprung
- 45: linke Nockenfläche
- 46: rechteNockenfläche
- 50: Rückwand
- 51: Haltevorsprung
- 52: Haltevorsprung
- 53: Deckel-Auflagefläche
- 54: Deckel-Auflagefläche
- 55: Kartenanschlagfläche
- 56: Kartenanschlagfläche
- 57: Federanlagefläche
- 58: Federanlagefläche
- 59: Ausnehmung
- 60: Kartenanwesenheitsschalter
- 61: Gehäuseboden
- 62: Führungsblock
- 63: Führungsfläche
- 64: schieberrseitige Schieberanheb-/Absenkmittel
- 65: Öffnung
- 67: Schieber-Platte
- 68: Schlitze
- 69: vorzugsweise vier Führungsflügel der schieberseitigen Anheb-/Absenkmittel
- 70: Kontaktkuppen
- 701: Kontaktkuppen
- 72: Führungsflächen
- 74: Flexprint
- 78: Herausführ-Anschlussende des Flexprint
- 80: Verstärkerelement
- 81: Schlitz
- 82: Schlitz
- 86: Halteplatte
- 89: Rückwandteil
- 93: Ausschnitte

## Patentansprüche

1. Ein Smart-Card-Connector (10), der folgendes aufweist: ein Gehäuse (11), in dem Lesekontakte aufweisende Lesekontaktelemente (16) in einem Schieber (14) angeordnet sind, der hin und her bewegbar im Gehäuse (11) derart gelagert ist, dass beim Stecken einer Smart-Card der Schieber (14) aus einer unteren Endlage durch die Smart-Card mitbewegt und angehoben wird und dadurch eine reibende Gleitbewegung zwischen Smart-Card-Kontakten und den Lesekontakten vermieden wird, so dass die Lesekontakte mit den Kartenkontakten der Smart-Card in Kontakt kommen, wobei eine Kontaktverbindung zwischen den im Schieber (14) angeordneten Lesekontaktelementen (16) und einem am Gehäuse (11) anbringbaren Anschluss eines Herausführelements (78), durch eine flexible Leiterplatte (74) hergestellt wird, **dadurch gekennzeichnet, dass** sich ein Kontaktelementverbindungsende der flexiblen Leiterplatte (74) nahezu über die gesamte Länge des Schiebers (14) erstreckt.

2. Ein Smart-Card-Connector (10) nach Anspruch 1, wobei ein Kartenanwesenheitsschalter (60) im Gehäuse (11) befestigt ist.

3. Ein Smart-Card-Connector (10) nach Anspruch 1, wobei das Gehäuse (11) durch einen Deckel (13), der im Gehäuse (11) befestigt ist, abgedeckt ist.

4. Ein Smart-Card-Connector (10) nach Anspruch 3, wobei der Deckel (13) aus Metall besteht, um den Kontaktbereich abzuschirmen.

5. Ein Smart-Card-Connector (10) nach Anspruch 1, wobei am Schieber (14) in Steckrichtung am hinteren Ende des Schiebers ein Mitnehmer (17) angebracht ist, in den die Karte beim Einsetzen anstößt.

6. Ein Smart-Card-Connector (10) nach Anspruch 1, wobei am Schieber (14), am in Steckrichtung hinteren Ende des Schiebers ein Mitnehmer (17) angebracht ist, an den die Karte beim Einsetzen anstößt und beim weiteren Einschieben der Karte den Schieber (14), aus einer Anfangsposition in eine End- oder Kontaktposition verschiebt, und zwar entgegen einer Vorspannung von Federn 20, 21.

7. Ein Smart-Card-Connector (10) nach Anspruch 1, wobei in der Kontaktposition der Schieber (14) an einem vom Gehäuse (11) gebildeten Anschlag (90) verriegelt ist und aus dieser Position durch weiteres Eindrücken der Karte gelöst werden kann.

## Claims

1. A smart-card-connector (10) comprising;
a housing (11) within which reading contact elements (16) are arranged comprising reading contacts, said reading contact elements being arranged on a slide (14) which is reciprocally movable within said housing (11) in such a manner that at the time a smart card is inserted the slide (14) is moved with the smart card and is lifted, thus avoiding a frictional slide movement between the smart card contacts and the reading contacts such that the reading contacts come into contact with said card contacts of the smart card, wherein a contact connection between the reading contact elements (16) arranged in the slide (14) and a connection of an outlet element (78) adapted to be mounted at the housing (11) is provided by a flexible circuit board (74) **characterised in that** a contact element connecting end of the flexible circuit board (24) extends approximately along the entire length of the slide (14).

2. A smart-card-connector (10) as set forth in claim 1 wherein a card presence switch (60) is mounted at the housing (11).

3. A smart-card-connector (10) as set forth in claim 1, wherein the housing (11) is covered by a cover (13) mounted in said housing (11).

4. A smart-card-connector (10) as set forth in claim 3, wherein said cover (13) is made of metal so as to shield the contact area.

5. A smart-card-connector (10) as set forth in claim 1, wherein at the slide (14), in direction of insertion at the rear end of the slide, a follower element (17) is mounted at which the card abuts when being inserted.

6. A smart-card-connector (10) of claim 1 wherein at the slide (14) at the rear end thereof in the direction of insertion, an element (17) is mounted at which the card abuts and wherein during the further insertion of the card, the slide (14) is moved against a pretension of springs (20, 21) from an initial or start position into an end or contact position.

7. A smart-card-connector (10) as set forth in claim 1 wherein in the contact position the slide (14) is locked at an abutment (90) formed by the housing (11), and wherein the card can be released from this position by a continued press-in-action.

## Revendications

1. Connecteur de carte à puce (10) comprenant :
un boîtier (11) dans lequel des éléments de contacts de lecture (16) sont agencés de façon à comprendre des contacts de lecture, les éléments de contact de lecture étant agencés sur une pièce coulissante (14) qui est mobile en va-et-vient dans le boîtier (11) de telle sorte qu'à l'instant où une carte à puce est insérée dans la pièce coulissante (14), ils sont déplacés avec la carte à puce et sont soulevés, évitant ainsi un mouvement coulissant avec friction entre les contacts de la carte à puce et les contacts de lecture de sorte que les contacts de lecture viennent en contact avec les contacts de la carte à puce,
dans lequel une connexion de contact entre les éléments de contact de lecture (16) agencés dans la pièce coulissante (14) et une connexion d'un élément de sortie (78) adapté à être monté sur le boîtier (11) est assurée par une carte de circuit souple (74) **caractérisée en ce qu'**une extrémité de connexion d'élément de contact de la carte de circuit souple (24) s'étend approximativement suivant la totalité de la longueur de la pièce coulissante (14).

2. Connecteur de carte à puce (10) selon la revendication 1, dans lequel un commutateur de présence de carte (60) est monté sur le boîtier (11).

3. Connecteur de carte à puce (10) selon la revendication 1, dans lequel le boîtier (11) est recouvert d'un couvercle (13) monté sur le boîtier (11).

4. Connecteur de carte à puce (10) selon la revendication 3, dans lequel le couvercle (13) est en métal de façon à protéger la région de contact.

5. Connecteur de carte à puce (10) selon la revendication 1, dans lequel au niveau de la pièce coulissante (14), dans une direction d'insertion au niveau de l'extrémité arrière de la pièce coulissante, est monté un élément suiveur (17) sur lequel bute la carte lorsqu'elle est insérée.

6. Connecteur de carte à puce (10) selon la revendication 1, dans lequel au niveau de la pièce coulissante (14) au niveau de son extrémité arrière dans la direction d'insertion, est monté un élément (17) sur lequel bute la carte, et dans lequel pendant une autre insertion de la carte, la pièce coulissante (14) est déplacée en contrant une pré-tension de ressorts (20, 21) à partir d'une position initiale ou de départ jusqu'à une position de fin ou de contact.

7. Connecteur de carte à puce (10) selon la revendication 1, dans lequel la position de contact de la pièce coulissante (14) est verrouillée au niveau d'une butée (90) formée par le boîtier (11), et dans lequel la carte peut être libérée de cette position par une action de pression entrante continue.
